# EUROPEAN PATENT SPECIFICATION

(11) **EP 3 331 367 B1**
(45) Date of publication and mention of the grant of the patent: **04.11.2020**
(21) Application number: 16751548.5
(22) Date of filing: 04.08.2016
(51) Int. Cl.: A21D 13/068, A21D 13/80, A21D 2/16, A23L 29/10

(54) **NON-BLOOM COMESTIBLE PRODUCT**
NICHT BLÜHENDES ESSBARES PRODUKT
PRODUIT COMESTIBLE SANS PROLIFÉRATION

(30) Priority: 05.08.2015 EP 15179904
(43) Date of publication of application: 13.06.2018
(73) Proprietor: Generale Biscuit, 92140 Clamart (FR)
(72) Inventor: RABAULT, Jean-Luc, 92140 Clamart (FR); DEGARDIN, Jerome, 92140 Clamart (FR); PRICE, Wayne, Reading Berkshire RG6 6LA (GB)
(74) Representative: Boult Wade Tennant LLP
(86) International application number: PCT/EP2016/068693
(87) International publication number: WO 2017/021510

(56) References cited:
- WO-A1-2006/056401
- WO-A1-2010/022914
- FR-A1- 2 889 650
- US-A- 2 539 518
- US-A- 2 746 868

## Description

The present invention relates to a comestible bakery product which contains one or more sources of cocoa butter (CB) or cocoa butter equivalent (CBE). It has been found that prior art products of this type may suffer from unwanted fat bloom on a surface of a bakery portion. In particular, the invention relates to comestible products, such as cookies, biscuits and soft cakes, which do not suffer from this unsightly bloom on a surface of a continuous bakery portion.

Fat bloom is the uncontrolled recrystallisation of fats in comestibles. Fat bloom is well known in chocolate and chocolate compounds, where fat migration and the polymorphism of CB or CBEs lead to the uncontrolled recrystallisation of fat. The recrystallised fat is often visible to the naked eye, resulting in an unpleasant or mouldy appearance.

Fat bloom in chocolate and chocolate compounds is a complex problem and it is often difficult to identify the exact cause. However, some factors are known to increase the likelihood of bloom. Increasing the mobility of the fat in the chocolate or creating contact between the chocolate or chocolate compound and another high fat material having a different composition is known to promote fat bloom due to undesirable, often inevitable fat migration. The inclusion of chocolate or chocolate compounds in baked goods, or enrobing fillings with chocolate to form confectionery products, leads to such contact between the chocolate or chocolate compound and the other fat containing materials which may result in bloom on the chocolate or chocolate compound surface and even on the non-chocolate surfaces.

Traditionally, biscuits containing sources of CB or CBE in the dough, or within an inclusion like chocolate chips, are made with either butter or palm oil as the main dough fat. Butter and palm oil have approximately 65 and 50% saturated fatty acids respectively. These relatively high saturated fats (the level of saturation of a fat is measured by the level of saturation of its fatty acids) avoid fat bloom by accelerating the crystallisation of the CB, which is entrapped in their fat network. This entrapment avoids any subsequent fractionation and recrystallisation. Other classical solutions are to use other fats with at least 50% saturated fatty acids; or partially hydrogenated oils or animal fats, both containing some trans fatty acids (TFA). These TFA have a high compatibility with CB and have been shown to mitigate the impact of fat bloom. However, TFA are known to be undesirable for the general health and well-being of the consumer. There is an increasing need to use more unsaturated fats with no TFA in bakery products.

CB or CBE have limited compatibility with most other fats and oils. CB and CBE are prone to phase separation in the product over time when the fat mobility is above a certain level, due for instance to either the use of a more liquid fat (*i.e.* one having a lower solid fat content) or due to the use of higher storage temperatures. This separation may be further exacerbated because the fat is hydrophobic and tends to limit its interaction with the hydrophilic ingredients inside the biscuit. Thus, this phase separation or fractionation often leads to the CB or CBE recrystallizing on the surface of the product. This crystallisation is immediately apparent to the consumer and results in complaints of a 'mouldy' appearance. The problem is made worse by increasing the amount of CB or CBE in the product, because there is more fat to recrystallise, and/or by decreasing the amount of saturated fat in the dough, because of a decreased compatibility with the CB or CBE and a reduction in the fat structuring effects.

Another strategy to mitigate the problem is to make baked goods with a very pale appearance. This makes the observation of any bloom difficult to see on a surface of the bakery portion. This strategy is often unacceptable due to the need for baked goods with a darker appearance, for instance containing cocoa, malt, or caramel or for products which have been the subject of intense Maillard reactions.

The problem of fat bloom on the surface of the continuous bakery portion is greatly enhanced when the continuous bakery portion (i) contains a more unsaturated fat (*i.e.* one which is more liquid), like rapeseed oil, and (ii) has a darker colour.

Finally, it is known to replace real chocolate (containing CB) with a cocoa butter replacer (CBR) compounds. CBRs are non-tempering fats and typically crystallise more readily into a stable formation. This means that there is less phase separation and less uncontrolled crystallisation on the surface, resulting in less fat bloom.

US2746868 relates to a fluid shortening composition comprising a baking improver which is a polyoxyethylene ether of a partial ester of a hexitan. The examples include a yellow cake recipe containing sorbitan tristearate.

WO2006056401 relates to a chocolate composition including a crystallisation-modifying emulsifier. This permits liquification and re-solidification without the formation of bloom without a pre-crystallisation step.

FR2889650 relates to a butterfat filling or imitation chocolate with a reduced butterfat and/or sugar content, and cereal cooking products comprising one such butterfat filling or imitation chocolate.

WO2010022914 relates to a process for producing an inclusion for use in a food product, the inclusion containing sugar and cocoa powder.

US2539518 relates to a stabilised chocolate material which contains polyoxyethylene sorbitan tristearate as a bloom retardant in chocolate coatings.

Therefore, one aim is to provide a comestible product which resists bloom formation on a bakery portion that tackles the drawbacks associated with the prior art, or at least provides a commercial alternative thereto.

According to a first aspect there is provided a comestible product comprising a continuous bakery portion and, optionally, one or more discrete inclusions, the comestible product comprising one or more sources of cocoa butter or cocoa butter equivalent, and the continuous bakery portion comprising sorbitan tristearate.

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The present invention relates to a comestible product. By comestible it is meant an edible foodstuff.

The comestible product includes a continuous bakery portion. A bakery portion is one made by the cooking, preferably by baking in an oven, of a dough (typically viscous) or a batter (generally more liquid). Depending on the moisture content of the bakery portion and/or the inclusion of polyols, the bakery portion can be considered as:
- "dry" (typically having less than 5wt% moisture and are hard and crunchy/crispy). Such dry products are referred to herein "biscuits and cookies"; or
- "soft" (typically containing more than 5wt% moisture, but having an Aw of below 0.85). Such soft portions often include added polyols, in particular if their Aw is below 0.8. The measurement of Aw is well known in the art. By soft it is meant that the product can be very soft or just not crunchy/crispy. Such soft products are referred to herein "soft cakes".

Comestible products including a continuous bakery portion are well known and include, in particular dry biscuits, preferably biscuits (generic name in Europe), cookies (generic name in US), crackers, wafers, and baked granola bars. The comestible products further include soft cakes which include preferably cakes, cupcakes, sponge cakes, soft bars, brownies, but also brioche, croissants, buns, muffins, Swiss rolls, patisserie products such as tarts, plaits, and swirls, pain au chocolat, macaroons, flapjacks, doughnuts, pies, scones, eclairs, Mille-feuille, puddings, flans, tortes, pancakes and profiteroles. The comestible product is preferably a cake, a cookie or a biscuit.

The comestible product may be in the form of a filled, layered or sandwich product. By a filled bakery product it is meant that the bakery product is provided with a filling or coating layer on at least one surface, or with a filling or coating layer within a cavity (open or closed) or with a filling or coating layer linking two or more bakery products together. For example, a sandwich biscuit may be considered as filled because the filling is provided between two biscuit portions. Preferably the comestible product is a single serving size and is preferably, but not always, provided in an individually wrapped form. Alternatively the single serving size may comprise several of the comestible product, such as 2 to 6, and these may be wrapped together.

As noted above, the comestible product described herein comprises a continuous bakery portion. The continuous bakery portion forms preferably the majority of the product, *i.e.* at least 50wt% thereof (preferably at least 75wt% thereof and, optionally 100wt% thereof) and typically forms the supporting structure (such as a biscuit portion in a chocolate biscuit), and may further be supplemented by a partial coating *i.e.* leaving a portion of the continuous bakery portion visible to the consumer, a filling, such as a creme or ganache, or discrete inclusions included within the continuous bakery portion of the comestible product. For example, the comestible product may take the form of a chocolate chip cookie where the discrete chocolate chips are surrounded by the continuous bakery portion of the baked cookie derived from a dough formulation. As will be appreciated, the inclusions may be within the continuous bakery portion but still present on and visible at a surface of the comestible product.

The one or more discrete inclusions may be selected from such ingredients as nuts, jellies, nougat, honeycomb, flavoured chips such as chocolate chips, coconut, toffee, oats, seeds, caramel, fudge, hard candy, marshmallows, cherries, raisins and dried fruit, or mixtures of two or more thereof. Examples of nuts include hazelnuts, peanuts, almonds and the like. Examples of dried fruit include raisins and dried pieces of apple, pear or banana. Preferably the discrete inclusions have an average particle size of from 1 to 15 mm, more preferably from 2 to 10 mm and most preferably from 3 to 8 mm.

Chocolate chips, as referred to herein include any solid chocolate piece inclusion, and may be referred to, for example, as pieces, chunks, chips, drops, or vermicelli. A chocolate compound as referred to herein may be used for chocolate-like inclusions. A chocolate compound is an imitation of chocolate but which cannot be called chocolate since it does not fulfil the regulations required for the chocolate standard of identity. Chocolate compounds are usually cheaper than chocolate. Quite often, this reduction in cost is due to the use of different fats. There are three main groups of chocolate compounds, differing by the type of fat used: CBE compounds (which, like chocolate, must be tempered), and on the other hand cocoa butter replacers (CBR) and cocoa butter substitutes (CBS) which do not require tempering. Chocolate compound is a technical term and the final name for the consumer varies depending on country or suppliers (imitation of chocolate, "pâte a glacer" in French, cocoa coating or glazing, etc.).

For the avoidance of doubt, the discrete inclusions, together with any coating or filling do not form a part of the continuous bakery portion when considering the amount of ingredients in the continuous baked portion, such as the sorbitan tristearate or the source of fat. When discussing the comestible product *per se*, this includes any inclusions, coating and filling. Unless otherwise specified, all percentages herein are by weight.

The product comprises one or more sources of CB or CBE. That is, any portion of the comestible product contains one or more such sources. The source may be in the continuous bakery portion, such as a cocoa powder for providing a dark chocolate product. The source may be in the one or more inclusions, provided within the continuous bakery portion, such as chocolate chips. The source may be in a coating or filling, provided on or within the continuous bakery portion, respectively. The source may be in two or more such locations. The source may also be chocolate or cocoa liquor which can both be mixed in liquid form through a dough before baking; such ingredients used in this way form a part of the continuous baked portion.

CB is well known and may be found as a component of composite ingredients including cocoa powder, cocoa liquor (also called cocoa mass), and chocolate. The CB or CBE amounts in the comestible product will vary depending on the desired product. When forming a chocolate continuous bakery portion, for example, the CB and CBE may be up to 10wt% of the continuous bakery portion, preferably from 0.3 to 10wt%, more preferably 0.5 to 8wt%, more preferably 0.7 to 6% and most preferably from 1.5 to 6wt%. Chocolate chips, coating and filling may contain any conventional level of CB or CBE suitable for forming a desirable final product.

CBEs are well known in the art and their use in food stuffs, particularly confectionery, is increasing as the global demand for cocoa butter exceeds its production. CBEs are defined in scientific terms in various food standards documents and in some jurisdictions a percentage of cocoa butter equivalents may replace cocoa butter without losing the right to describe the product as chocolate. European Union regulations define CBEs as: non-lauric vegetable fats, rich in symmetrical monounsaturated triglycerides; miscible, in any proportion, with cocoa butter; compatible with its physical properties (melting point, crystallisation temperature, melting rate and need for tempering phase, *i.e.* they are polymorphic); obtained by the processes of refining and/or fractionation, which excludes enzymatic modification of the triglyceride structure. Common sources of CBEs include shea, illipe, sal, kokum gurgi, mango kernels and palm oils. CBE may be used to replace some or all of the cocoa butter in comestible ingredients. CBEs are distinct from CBR and CBS, which are both non-tempered fats well-known terms in the art.

Although CBE are sometimes said to have physical properties equivalent to cocoa butter, there are soft and hard CBEs. Cocoa Butter Improvers (CBI) is a specific class of CBE, being much harder than CB itself, and melting at a higher temperature and are used to improve temperature tolerance of chocolate. There are also fats which have the same physical and chemical characteristics of CB, CBE or CBI, but are obtained in a way not allowed by the various local chocolate regulations / Codex (because of other vegetable origin, due to too much specific minor lipid components or due to the use of hydrogenation or interesterification for instance; or produced by GMO algae): if they are used, even at less than 5%, the product cannot be labelled chocolate.

The common point of these CB, CBE/CBI is that they are called tempered fats. These are polymorphic fats stable in beta form. Tempering is mandatory to allow for a quick crystallisation to form small fat crystals and in a stable beta form. The use of any other polymorphic fat, *i.e.* palm mid fractions would also exhibit the same problem described herein.

The term CBE as used herein encompasses CBIs and the fats which have similar physical and chemical characteristics but do not comply with regulations to be called CBE or for being permitted in the relevant chocolate standard of identity. It also includes fat-rich products/components rich in tempered fats, but being less purified fractions than CBE like palm mid fractions or shea stearin.

Preferably the terms CBE and CB as used herein are given their strict definition.

The comestible product comprises one or more sources of CB or CBE. That is, the continuous bakery portion of the comestible product may comprise a source of CB or CBE such as, for example, a cocoa powder finely distributed throughout the dough mix used to form the continuous bakery portion. Alternatively, the source of CB or CBE may be included in the discrete inclusions, such as in the form of chocolate chips. Preferably the source is at least cocoa powder present in the continuous baked portion. In such products the disadvantages of bloom are exacerbated because it is more readily seen on the dark surface of the product. In order to provide a sufficiently dark surface for bloom formation to be readily visible, the continuous bakery portion will typically contain at least 1wt% of cocoa powder (defatted or non-defatted). The continuous bakery portion will preferably contain at most 15wt% of cocoa powder (defatted or non-defatted), preferably less than 10wt% and more preferably less than 7wt%.

Preferably, the cocoa powder is alkalized. Alkalised cocoa powder is darker in colour than non-alkalised cocoa powder, so less is required to provide a dark colour to the product. However, the darker colour may exacerbate the appearance of any bloom by providing additional colour contrast.

Preferably the continuous bakery portion has a surface having colour such that the presence of any fat bloom thereon would be readily discernible. The colour may be achieved by, for example, the addition of cocoa, malt, caramel or intense Maillard reactions.

In one embodiment the source of CB or CBE is preferably present only in the continuous bakery portion. Preferably the source of CB or CBE is cocoa powder, chocolate (in molten form when stirred through the dough) or cocoa liquor.

The continuous bakery portion comprises sorbitan tristearate. Sorbitan tristearate is also known as STS and is identified by the E-number in Europe E492. It is known to have bloom retarding function when included in chocolate or chocolate compounds formulations and it is known that it can act as an emulsifier in dough. The inventors have found that the use of STS as described herein has bloom retarding function when included in the continuous bakery portion of a comestible product. The inventors have found that the use of STS as described herein prevents bloom on the surface of the continuous bakery portion.

The present inventors have sought to provide a healthy baked product. In particular, the inventors have focused on the provision of a healthier cookie product. Although the following description is described in relation to a biscuit product, it should be appreciated that the advantages discussed may be applied equally to other comestible products comprising a continuous bakery portion. In particular, those comestible products include the dry biscuits or soft cakes discussed above.

In order to provide a healthier cookie, the inventors have sought to reduce the fat content of the dough used to form the cookie. Moreover, the inventors have sought to reduce the saturated fat content, and avoid partially hydrogenated fats, as well as reducing the content of palm oil, butter or other animal fats in the biscuit or removing it entirely. However, the inventors have found that this move to a low fat system has exacerbated problems associated with bloom formation on a surface of the product. This is particularly a problem when the product has a dark surface, such as the result of the inclusion of cocoa powder ingredients or following Maillard reactions to form a browned crust. Against these darker surfaces the formation of even small amounts of bloom may be readily discerned.

Although it is known to include STS in chocolate or chocolate compounds to prevent bloom formation, this can only be achieved with a controlled rigorous process including 2 steps:
- fully melting the STS (which must be at a temperature in excess of about 60°C, such as heating at 65 to 70°C) inside a fat continuous phase made of cocoa butter, which means heating the STS above its melting temperature during conching, and ensuring vigorous mixing for homogeneous liquid-liquid dispersion;
- co-crystallising the chocolate with the STS with specific heat treatment steps below 40°C, under shear, to control the polymorphism of the chocolate. For example, US2539518 teaches mixtures of the emulsifier STS and polyoxyethylene sorbitan tristearate as an ingredient in chocolate to prevent or delay bloom.

The present inventors have found that the inclusion of STS in the continuous bakery portion of such a comestible product serves to reduce the likelihood of bloom formation on the surface of the continuous bakery portion of the product. This is particularly surprising because it is able to prevent the bloom formation despite not having been first melted and mixed, then co-crystallised with the CB/CBE, and despite the fact that the bloom is formed on the dough itself, rather than on the chocolate. Moreover, it is surprising because the biscuit:
- is not a fat continuous matrix (whereas chocolate is fat continuous), but starts as an emulsion which is then dried during baking;
- is typically aerated thanks to the baking powders and baking process, leaving a very porous matrix;
- cannot be tempered and is usually cooled slowly to below 20°C.These characteristics lead to a very slow crystallisation of the fat phase *i.e.* CB/CBE, promoting large crystal growth, thus visible bloom.
- is using less saturated fats, and in some cases much less saturated, than in chocolate or chocolate compounds, and it is known that less saturated fats have a greater liquid fraction, enabling more oil mobility, fractionation and recrystallisation.

Preferably the STS is present in an amount of up to 3wt% of the continuous bakery portion, preferably up to 2wt%, but more preferably up to 1wt%. Preferably the STS dose will be at least 0.01wt%, more preferably 0.1wt%, and even more preferably, 0.1 to 1wt% or 0.2 to 1wt%. Preferably the STS is present in an amount of from 0.3 to 1.0wt% of the continuous bakery portion. The present inventors have surprisingly found that the inclusion of STS in the continuous bakery portion of a comestible in an amount of up to 1wt% by weight of the continuous bakery portion is effective in the prevention of fat bloom on a surface of said continuous bakery portion.

Without wishing to be bound by theory, it is believed that the bloom found on low fat baked products, such as chocolate chips cookie with cocoa powder in the dough, results from the migration of fat CB or CBE to the surface of the continuous bakery portion. This is believed to be a fractionation (*i.e.* the separation) of the CB/CBE main triglycerides (POP, POS and SOS) from the rest of the fat (because of limited compatibility), and its recrystallisation into large crystals (visible by the naked eye) on the surface of the baked good, due to slow and uncontrolled crystallisation, especially because of no tempering and no active cooling.

The prevalence of this uncontrolled recrystallisation appears to be affected by a number of different aspects of the dough formulation and the method used for forming the comestible product.

It is further believed that this is exacerbated by the use of fat which stays liquid at room temperature in the dough portion, the thermally abusive process of baking the product (which is much hotter than any chocolate manufacture) and the evaporation during baking, which may displace some fat toward surface. Even when the only source of CB or CBE is in, for example, chocolate chips, the mixing of the dough, especially when occurring at a temperature above 25°C, and especially above 28°C, or 30°C (up to 32°C) is likely to increase this risk of bloom formation due to greater extraction of CB from the chocolate chips. Nonetheless, the surprising effect of including STS in the dough component is that, despite these conditions which encourage fat migration, the presence of bloom can be avoided.

Preferably the continuous bakery portion has less than 32wt% fat, more preferably less than 27wt%, more preferably less than 22wt% fat, more preferably less than 18wt%, less than 15wt%, less than 12wt% fat, more preferably from 8 to 10wt%. For cookies and the like, the fat in the continuous bakery portion is preferably less than 16wt%, much preferably less than 12wt%, whereas for soft cakes and similar products, the fat content is likely to be higher, such as from 12 to 32wt%, preferably 15 to 29wt % and more typically 16 to 25wt %. The provision of a low fat continuous bakery portion has advantages for the health of the consumer and helps to provide a desirable product. However, it can also lead to elevated risks of fat bloom due to initial higher ratio of (CB + CBE) / total fat in the bakery portion, or due to a quicker increase of this ratio following a migration from the CB or CBE source. Where the fats are healthier fat sources, being more liquid at ambient temperature, they increase overall oil/fat mobility and can dissolve cocoa butter from chocolate chips, decrease their melting point and help finally more CB/CBE to come on the surface of the bakery portion to recrystallize.

Preferably the added fat (*i.e.* the ingredients added as fats to the dough and not those as included within flavourings such as cocoa powder or melted chocolate or cocoa liquor) in the continuous bakery portion is low in saturated fat, such as less than 45wt% by weight of the fatty acids, more preferably less than 40wt%, more preferably less than 30wt%, more preferably less than 20wt%, and most preferably less than 10wt% or even less than 8wt%. Saturated fat provides improved structure and oxidation stability to products, but is considered to be unhealthy.

Preferably the continuous bakery portion is low in saturated fat, such as less or equal than 49wt% by weight of the fatty acids, more preferably less or equal than 45wt%, less or equal than 40wt%, more preferably less or equal than 30wt%, more preferably less or equal than 20wt%, and most preferably less than or equal 10wt% or even less or equal than 8wt%. The saturated fat in the continuous bakery portion includes the contribution from flavourings such as cocoa powder, melted chocolate or cocoa liquor, but not from inclusions, coatings or fillings.

Preferably the product does not contain partially hydrogenated fats. Preferably the product does not contain fully hydrogenated fats. Preferably, it does not contain any hydrogenated fats.

Preferably the product does not contain palm oil or fractions of palm oil having 48% or more of saturated fatty acids, or at least contains less than 20wt%, more preferably less than 10wt%, more preferably less than 5wt% palm oil and/or such palm fractions.

Preferably the product does not contain any palm oil or any palm oil fraction, or at least contains less than 20wt%, more preferably less than 10wt%, more preferably less than 5wt% palm oil and/or palm oil fraction.

Preferably the product does not contain animal fat, or at least contains less than 4wt%, more preferably less than 2wt%, still more preferably less than 1wt% animal fat based on the weight of the continuous bakery portion. Exemplary animal fats include milk fat, lard and tallow.

Preferably the moisture content of the comestible product, especially for biscuits and cookies, is less than 4wt% of the product, more preferably less than 2wt%. For soft cakes, brownies and the like, the moisture content is preferably less than 25wt%, more preferably from 10 to 18wt%.

Preferably the continuous bakery portion comprises a source of CB or CBE. Preferably the source of CB or CBE comprises cocoa powder.

Preferably the one or more discrete inclusions comprises a source of CB or CBE. Preferably the source of CB or CBE comprises chocolate.

In a further embodiment the comestible further comprises a filling and or coating. The filling and/or coating, if present, may comprise a source of CB or CBE. Preferably the filling and/or coating comprises a source of CB or CBE. Preferably the source of CB or CBE comprises cocoa powder. Preferably the coating is chocolate or chocolate compound coating.

Preferably the product has a post-baked slowly available glucose content of at least about 15g per about 100g of the product, more preferably at least 16.5g/100g of product, more preferably at least 18.0g/100g, still more preferably at least 21.0g/100g.

It is believed that slowly digestible starch gives a higher health benefit than rapidly digestible starch. Indeed, rapidly digestible starch is rapidly broken down into glucose during digestion and thus rapidly made available to the body. Therefore, the blood glucose level rapidly increases. This can trigger an increased insulin delivery leading to some storage in adipose tissues. Consequently, energy can only be provided for a shorter time. On the contrary, slowly digestible starch is slowly assimilated by the body. Consequently, energy can be provided for a longer time.

SDS or slowly available glucose (SAG) can be characterised through the slowly available glucose (SAG) measurement by Englyst method ("Rapidly Available Glucose in Foods: an In Vitro Measurement that Reflects the Glycaemic Response", Englyst et al., Am. J. Clin. Nutr., 1996 (3), 69(3), 448-454; "Glycaemic Index of Cereal Products Explained by Their Content of Rapidly and Slowly Available Glucose", Englyst et al., Br. J. Nutr., 2003(3), 89(3), 329-340; "Measurement of Rapidly Available Glucose (RAG) in Plant Foods: a Potential In Vitro Predictor of the Glycaemic Response", Englyst et al., Br. J. Nutr., 1996(3), 75(3), 327-337). SAG refers to the amount of glucose (from sugar and starch, including maltodextrins) likely to be available for slow absorption in the human small intestine. The SDS content equals the SAG content when there is no other SAG source than starch, i.e. SDS. Rapidly available glucose (RAG) refers to the amount of glucose likely to be available for rapid absorption in the human small intestine.

In Englyst method, product samples are prepared by manually and roughly grinding one or more of the products. The samples are then subjected to an enzymatic digestion by incubation in presence of invertase, pancreatic alpha-amylase and amyloglucosidase under standardised conditions. Parameters such as pH, temperature (37 °C), viscosity and mechanical mixing are adjusted to mimic the gastrointestinal conditions. After an enzymatic digestion time of 20 min, glucose is measured and is labelled RAG. After an enzymatic digestion time of 120 min, glucose is again measured and is labelled available glucose (AG). SAG is obtained by subtracting RAG from AG (SAG = AG - RAG), thus, SAG corresponds to the glucose fraction released between the 20th and the 120th minute. Free glucose (FG), including the glucose released from sucrose, is obtained by separate analysis. RDS is then obtained as the subtraction of FG from RAG (RDS = RAG - FG).

According to a further aspect there is provided a method of producing a comestible product, the method comprising:
(i) preparing a dough,
(ii) optionally adding one or more discrete inclusions to the dough, and
(iii) baking the dough to form one or more comestible products,
wherein the comestible product comprises one or more sources of cocoa butter or cocoa butter equivalent, the one or more sources of cocoa butter or cocoa butter equivalent being present in the dough and/or the one or more discrete inclusions, and
wherein the dough comprises sorbitan tristearate.

Preferably, the STS is added to the dough as a fine powder, and dispersed as a solid inside the viscous dough. As a less preferred alternative, the STS can be pre-melted and dispersed in the liquid state in a melted fat (added fat or melted chocolate) which is then used in the dough. Inventors have found that in situ melting during baking is enough, even if there is no mixing of the liquid STS within the liquid fat phase.

The one or more discrete inclusions added in step (ii) may be added during or after the formation of the dough. For example, the inclusions may be added into a mixer and then the remaining ingredients and water may be added to together form and prepare a dough.

Moreover, as will be appreciated for mass production of such products, the steps may be part of a continuous process. For example, mixed batches of dough may be fed to a hopper for shaping and baking. In a continuous process the dough may be conducted through the process on a conveyor system.

Preferably, the discrete inclusions are added at the end of the dough formation, especially to reduce breakage and oil migration.

The method may further comprise adding a filling and/or coating, before or after baking. The filling and/or coating may comprise a source of CB or CBE.

The inventors have further found that the inclusion of STS has an advantageous effect on the processing conditions which can be used in the manufacture of the comestible product. Specifically, baked products produced may be actively or passively cooled when removed from the oven. That is, the baked products may be allowed to cool under ambient conditions or may be subjected to forced cooling, such as by the passage of cooled air. Passive cooling may encompass the provision of circulating air fans, but forced or active cooling encompasses fast temperature changes such as air cooling below 18°C (preferably < 12°C), such as in a cooling tunnel. It is possible to use successively passive cooling then active cooling: in this case, the whole process will be considered as active cooling.

It has been found that the presence of an amount of palm oil in a fat composition in a bakery portion can act to stabilize a fat blend to prevent bloom formation, provided that the baked product is subjected to forced cooling. However, if simply left to stand, then bloom formation may occur, even when palm oil is present. The inventors have found that the inclusion of STS allows the final product to be either actively or passively cooled without the risk of bloom formation. This is advantageous since the option of passive cooling can lead to energy savings and reduce the production costs. It is also still efficient in case the product heats above 35°C during storage (erasing crystals), then cools back, slowly in this case.

Preferably the one or more discrete inclusions are selected from nuts, jellies, nougat, honeycomb, flavoured chips such as chocolate chips, coconut, toffee, oats, seeds, caramel, fudge, hard candy, marshmallows, cherries, raisins and dried fruit, or mixtures of two or more thereof.

Preparing the dough comprises the mixing of a conventional dough containing water, cereal products such as refined or wholegrain flours, sugars, a source of fat (such as butter, shortenings, palm oil or rapeseed oil) and optionally eggs, cocoa powder or liquor or cocoa butter and baking powder. Examples of suitable recipes are well known in the art and vary depending on the specific target product. The specific components of the dough are not important in relation to the interaction of the STS and the formation of bloom from the source of CB and CBE. Examples of suitable recipes and the ingredients required are provided in WO2012/120154.

Preferably the dough comprises a source of fat which is entirely liquid at room temperature. For the avoidance of doubt, the term "source of fat" refers to all of the added fat contained within the dough, rather than individual sources, but excluding CB/CBE inside the continuous bakery portion. Thus, the source of fat may be comprises of one or more different fats, such as canola oil, rapeseed oil and palm oil. Added fat correspond to the fat added pure, and do not comprise the fat coming from non-refined ingredients like flour, eggs, cheese and so on.

Preferably the source of fat of the dough has a solid fat content (SFC) of less than 5% at 25°C, preferably less than 1% at 25°C, and most preferably 0% at 20°C. Such fat compositions provide a healthy final product, but have been found to exacerbate the risk of bloom formation. Methods of measuring SFC are well known in the art, with diagnostic machines available to measure the SFC of any fat composition. SFC are measured according to the ISO-8292-1D (non-stabilising, direct) measurement standard.

Preferably, the added dough fat is chosen from oils mostly liquid at 25°C (like palm olein, shea olein, rapeseed / canola, sunflower, corn, soybean oils; including high oleic variants), but may also include blends of these with palm oil or other hard fats (including hydrogenated ones).

In particular, preferably the comestible product described herein has a bakery portion which is formed from a dough comprising a source of fat having a solid fat content (SFC) of less than 5% at 25°C, preferably less than 1% at 25°C, and most preferably 0% at 20°C.

Preferably the dough does not contain polyols.

Preferably the step of preparing the dough further includes shaping the dough into individual portions. This may be by wire cutting and or by rotary moulding, for example. The step of splitting or forming the dough in discrete pieces preferably takes place before the step of baking the dough for products such as biscuits and soft cakes. The step of splitting or forming the dough in discrete pieces can also takes place after the step of baking the dough for products such as brownies and layer cakes. Some products, like Brownies, can be done both way, depending on whether the product is to be baked in a mould or on the oven band or plates.

The baking step may be at temperatures of up to 200°C or even higher and for durations of from 1 to 20 minutes or more, time depending on size and baking temperature, as well as initial and final water content. Such baking conditions may be sufficiently harsh to favour fat migration and bloom formation.

Preferably the baked comestible products are allowed to cool after baking. That is, preferably the baked comestible products are not actively cooled. Alternatively, the baked comestible products may be submitted to forced air. Where a partial covering with chocolate is to be performed, this requires cooling of the base cake to reach 25-30°C before the chocolate coating.

Preferably the method further comprises packaging the product, optionally singularly.

Preferably, packaging takes place with a product temperature below 35°C, preferably between from 0 to 35°C, more preferably 16 to 35°C, preferably 17 to 30°C, preferably 18 to 25°C and 20 to 25°C. This may require air conditioning. For cheaper manufacturing process, air conditioning at the packaging stage may be avoided, and preferably the product is packed when its surface reach 24 to 30°C, preferably 25 to 27°C.

Preferably the baked comestible product is shelf stable for at least 2 weeks, preferably at least 4 weeks, preferably at least 2 months, preferably at least 3 months, more preferably 6, even more preferably 9 months when stored at 20°C. That is, the product remains fresh and without bloom on the surface of the continuous bakery portion for at least this period when stored at 20°C. As will be appreciated, high storage temperatures can cause excessive risk of bloom. However, the product described herein can be kept at ambient temperatures, *i.e.* without refrigeration, without developing bloom on a surface of the continuous bakery portion.

Preferably the method is for the production of the comestible product as described herein.

According to a further aspect there is provided the use of STS in a continuous bakery portion of a comestible product comprising a source of cocoa butter or cocoa butter equivalent, to prevent fat bloom.

By prevent fat bloom it is meant that no visible fat bloom occurs in the comestible product after 4 weeks storage at 20°C, more preferably no fat bloom has occurred in after 8 weeks and even more preferably after 6 months. Preferably the use is for preventing fat bloom in comestible products having a low-fat continuous bakery portion. By low fat it is meant that the continuous bakery portion has less than 12wt% fat, more preferably from 8 to 10wt%.

The comestible products, inclusions, coatings, fillings or the like discussed herein may be described as being or containing chocolate, even when they include cocoa butter equivalent (CBE) even though such products may not be sold as chocolate in some jurisdictions.

### Figures

The present disclosure will be described in relation to the following non-limiting figures, in which:
Figure 1 shows the structure of STS.
Figure 2 shows the results of a test of the effect of cocoa butter content in rapeseed oil on blooming. The x axis shows the weight of CB (g) for 100g of rapeseed.
Figure 3A shows the results of a test of including palm oil in rapeseed oil on CB blooming.
Figure 3B shows the results of a test of including palm oil in rapeseed oil on CB blooming. The image was taken after 26 weeks of storage.
Figure 4 shows the results of a test of including sorbitan tristearate in rapeseed oil on blooming of CB. The image was taken after 21 weeks of storage.
Figure 5A shows a control biscuit without STS in the dough according to Example 4 showing bloom on the surface.
Figure 5B shows a control brownie without STS in the dough showing fat bloom on a cut side according to Example 5 (picture taken after 8 weeks of storage at 25°C).

### Examples

The present disclosure will be described in relation to the following non-limiting examples.

The relative stability of the fat phase was investigated assuming different levels of cocoa butter mixing and different conditioning (either stored directly at 20°C or first chilled at 5°C for 2 hours). This approach assesses the critical amount of cocoa butter required for recrystallisation in the dough fat (rapeseed) and the impact of other stabilisers without the need to wait several months for the exchange of fats between dough and the source of cocoa butter or cocoa butter equivalent.

All the model systems exclude the interaction of sugar/starch/flour/dough structure and focus on the recrystallisation of the cocoa butter influenced by cocoa butter concentration compared to the concentration of the other fats and oils, emulsifier/surfactant interactions, and stabilisation by a crystal network. Although in a real baked product there will be some interaction between the fat and the flour, sugar and other ingredients, it is known in the art that fat only models provide a good reflection of the behaviour of the fat phase. The models used therefore provide strong evidence of the effectiveness of the components investigated.

The composition of the model fat blends is given in the Table 1 below:

| Fat component % | A | B | C | D | E | F | G |
|---|---|---|---|---|---|---|---|
| Rapeseed | 85.42 | 82.83 | 80.39 | 78.10 | 67.21 | 78.10 | 73.21 |
| Lecithin | 2.08 | 2.02 | 1.96 | 1.90 | 1.64 | 1.90 | 1.79 |
| Cocoa butter | 12.50 | 15.15 | 17.65 | 20.00 | 14.75 | 17.14 | 16.07 |
| Palm | | | | | 16.39 | | |
| STS | | | | | | 2.86 | 8.93 |
| Grams of CB per 100g of rapeseed | 14.6 | 18.3 | 22.0 | 25.6 | 21.9 | 21.9 | 21.9 |

### Example 1

The objective of the first test was to understand the critical level of cocoa butter (CB) required in the dough's fat phase for fat bloom to develop. CB could be incorporated into the dough directly or by migration or the mechanical mixing of the cocoa powder (CP) and/or chocolate chips (CC).

The effect of cocoa butter concentration on blooming was modelled using the fat compositions A - D in Table 1. The fat compositions were heated to 65°C to ensure all components were fully melted and mixed. A 10g sample of each composition was added to separate Petri dishes and chilled at 5°C for two hours before being stored at 20°C. A second 10g sample of each composition was added to separate Petri dishes and directly stored at 20°C. All the samples were stored at ambient conditions for 21 weeks.

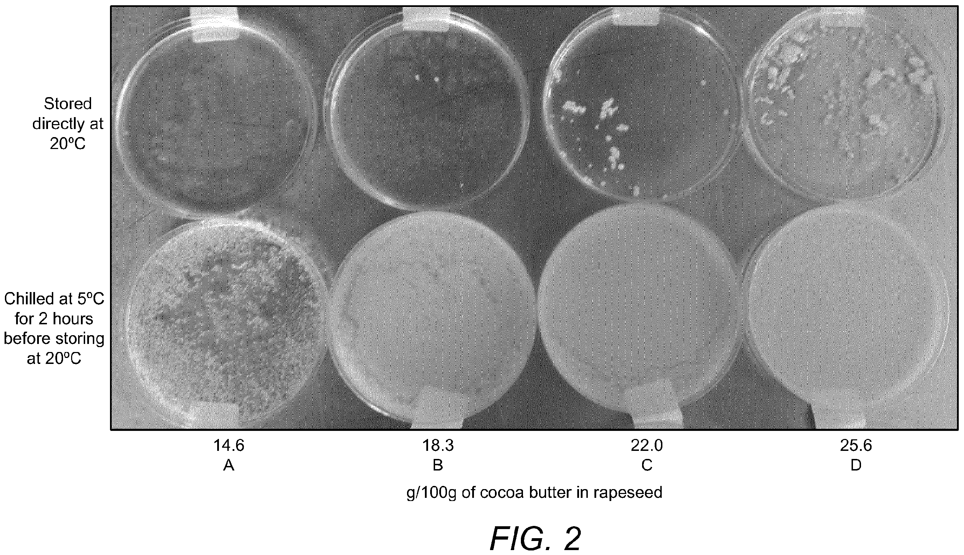

As shown in Figure 2, bloom occurred in the non-pre-chilled samples of compositions B, C and D which is clearly shown by the non-uniform formation of crystal structures. The pre-chilled sample of composition A had formed a stable, uniform structure and due to the low concentration of crystallising fat the overall appearance may look inhomogeneous, but on closer inspection it can be concluded that the product structure is not the same as a bloomed sample. The pre-chilled samples of compositions B, C and D all formed a uniform stable crystal structure.

Ambient cooling clearly shows the relationship between CB concentration and the likelihood of recrystallisation. The critical concentration required for fat bloom at 20°C is approximately 18.3g of CB /100g of rapeseed.

Pre-chilling the fat phase has shown to create a more uniform crystal structure for all but the lowest level tested where there is insufficient crystalline fat to form a continuous network (explained above). This uniform crystal structure is not expected to translate into fat bloom in finished product.

To test the effectiveness of ingredient changes for preventing fat bloom, 22wt% of cocoa butter was added in examples 2 and 3.

### Example 2

The objective of the second test was to understand whether changing the fat phase in a cookie from 100% rapeseed to an 80/20 rapeseed/palm oil mix could prevent the development of fat bloom.

The effect of palm oil as a crystal stabiliser was investigated using composition E given in table 1 and the method of example 1.

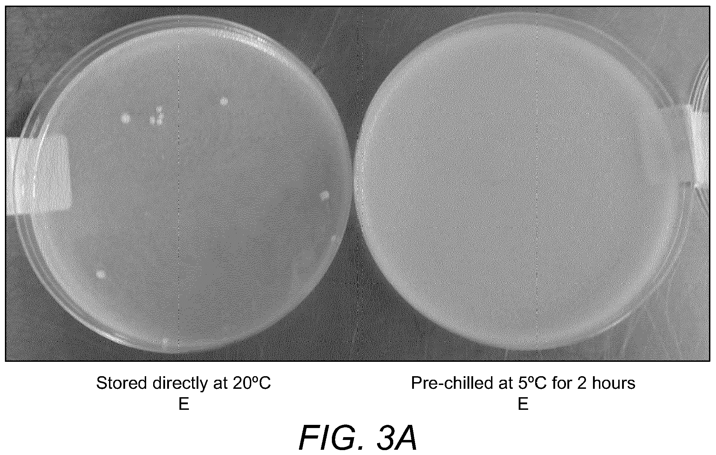

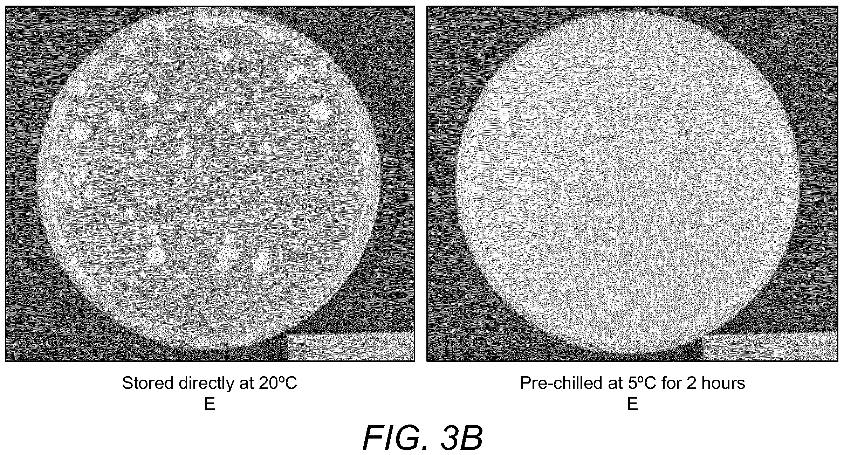

As shown in Figure 3A, the non-pre-chilled sample showed bloom clusters after 21 weeks while the pre-chilled sample formed a stable, uniform structure (Figure 3B showing the same trials and results, with a picture taken after 26 weeks). It is noted that the bloom clusters were already visible at 4 weeks for the non-pre-chilled sample.

The blending of palm oil with rapeseed is able to mitigate the development of fat bloom only if the palm containing product is pre-chilled. If this fat blend is left to cool in ambient conditions fat bloom will develop.

### Example 3

The objective of the third test was to understand whether the addition of sorbitan tristearate (STS) could prevent the development of fat bloom.

The effect of STS as a crystal stabiliser was investigated using compositions F and G given in table 1 and the method of example 1.

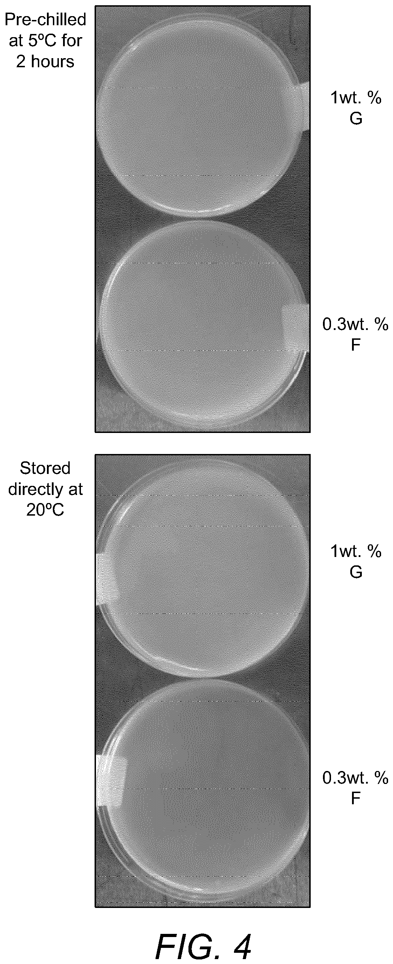

As shown in Figure 4, none of the fours sample showed fat bloom clusters after 21 weeks of storage.

In all conditions tested the STS was able to inhibit crystal growth. The independence from conditioning *i.e.* chilled or ambient provides a flexible solution that may be suited to process variability.

When the fat phase of composition F and G makes 10.7% of a biscuit (including CB from cocoa powder), then the STS concentration in the biscuit is 0.3 and 1% (rounded) respectively, as indicated in figure 4.

### Example 4

The effectiveness of the invention has been demonstrated in a dry biscuit formulation. The formula tested is given below;

| Ingredient | Wt% in Dough |
|---|---|
| Refined soft wheat flour | 31.4 |
| Wheat bran and germ | 3.0 |
| Whole grain spelt flour | 0.95 |
| Whole grain rye flour | 3.2 |
| Whole grain barley flour | 5.7 |
| Whole grain oat flakes | 7.9 |
| Sugars | 16.9 |
| Rapeseed oil | 8.04 |
| Added Water | 6.4 |
| Cocoa Powder (11% fat) | 3.0 |
| Chocolate Drop (26% fat) | 11.3 |
| Sorbitan Tristearate | 0.4 |
| Flavouring powder | 0.27 |
| Emulsifier | 0.33 |
| Salt | 0.25 |
| Leavening Agent | 0.80 |
| Vitamin and mineral blend | 0.16 |
| TOTAL | 100 |
| Relative wt% after baking | Between 86.6 and 87.7 |

The ingredients of the dough were mixed together in a vertical mixer until the dough had a homogenous consistency.

The STS (STS 2007 Powder, Palsgaard) was added directly as a powder, without pre-melting. The dough was then rested for 15 minutes maximum.

Throughout these processes the dough temperature was maintained at, or below 24°C. After resting, the dough is fed into the hopper of the rotary moulder for forming the biscuits. The dough was fed so that the moulding and grooved cylinders of the rotary moulder are nearly visible. The speed differential of the moulding and grooved cylinder is kept below 10 %.

The biscuits were then glazed with a glazing that comprises (in weight percentage of the final biscuit):
sodium hydroxide less than 0.1wt%
skimmed milk powder less than 0.3wt%
water less than 2.0wt%.

After glazing the biscuits were conveyed to the oven for baking for about 7 min. During baking the temperature of the dough remained under 160 °C. At the end of baking the water content was between 1 and 2wt%.

When the biscuits are taken out from the oven, they are allowed to cool down on open belts until the temperature of the biscuits is below 40°C.

Samples were stored at temperature range of 15 to 20°C and in a controlled climatic room at 16°C.Samples containing STS exhibited no signs of bloom for the 33 weeks of observations. Moreover, samples stored at 25°C exhibited no signs of bloom for 33 weeks of observations.

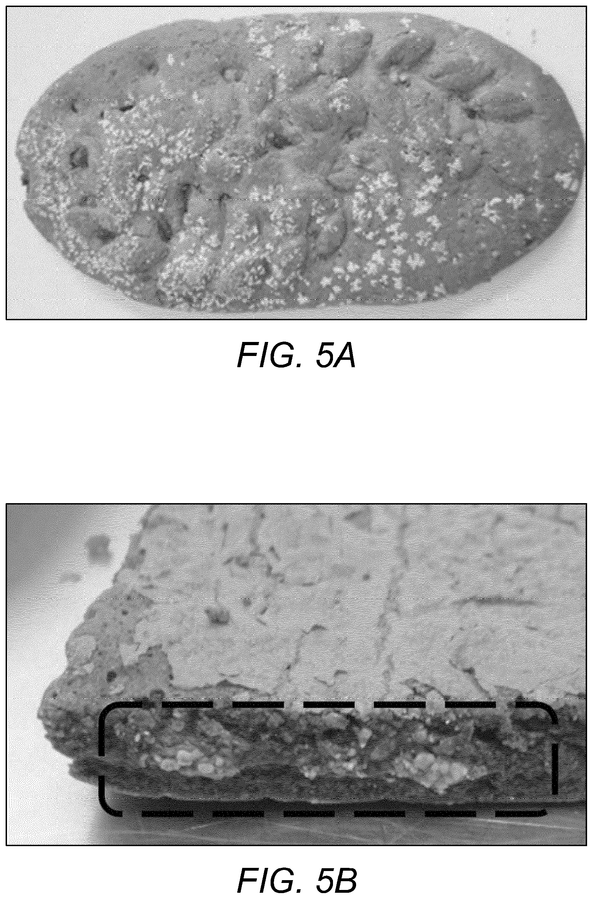

Samples made to the same method, without STS (instead having 0.4% more rapeseed oil) showed signs of bloom after 5 weeks when stored at temperature range of 15 to 20°C. The onset of bloom was more rapid at storage temperatures of 16°C, with bloom observed on the dough portion after 4 weeks and shown in Figure 5A.

### Example 5 - Brownie

Soft cakes of a brownie type were made based on a variant of example 1 of EP2384630.

The Brownie comprises a filling layer (and chocolate pieces) at the center of a Brownie dough. After baking, the filling makes a continuum with the brownie dough and brings the appearance and texture of a freshly baked brownie, having a softer / moister and stickier center.

The present example 5 describes a Brownie according to the present invention (with STS in the dough) and a control Brownie (without STS in the dough). Both have the same filling and chocolate pieces, as described below. Both also have the same process.

### Preparation of Brownie dough

The dough for the first and second layers of dough material was prepared from the material in the following recipe (amounts in wt%):

| | **Control (comparative)** | **Invention (with STS)** |
|---|---|---|
| Wheat flour | 12.05 | 12.05 |
| Sugar | 25.00 | 25.00 |
| Whole eggs | 18.00 | 18.00 |
| Fat blend (27% rapeseed / 73% palm olein) | 21.00 | 20.00 |
| Sorbitan Tristearate (STS) powder, Palsgaard ref. 2007 Powder | 0.00 | 1.00 |
| Water | 2.70 | 2.70 |
| Glycerin | 1.50 | 1.50 |
| Liquid dark chocolate | 17.00 | 17.00 |
| Cocoa powder | 2.00 | 2.00 |
| Baking powder | 0.20 | 0.20 |
| Flavor | 0.40 | 0.40 |
| Salt | 0.10 | 0.10 |
| Xanthane | 0.05 | 0.05 |
| **Total** | **100.00** | **100.00** |

Palsgaard STS used for examples 4 and 5 is a fine powder, having D10 = 14µm, D50=100 µm and D90 about 300 µm (as measured by laser granulometry).
The dough was prepared in a conventional manner with the following steps:
1. in a dough mixer, blend and dissolve the sugar and flavor in the eggs, water and glycerin;
2. Premix all powders (including STS for the invention) together, then add into the dough mixer;
3. Add the fat blend and mix well;
4. Add the liquid chocolate (premelted at 45°C) and mix until homogeneous.

Dough temperature was 24°C at the end of mixing. The dough had a water activity Aw of 0.83.

### Preparation of filling material (brownie type)

The filling material was a commercially available, bake stable chocolate filling having the following composition, as provided by the supplier (amounts in wt%):

| | |
|---|---|
| Sugars | 82 |
| (dextrose, glucose syrup, sucrose and invert sugar) | |
| Skimmed milk powder | 4 |
| Cocoa powder | 6 |
| Starch | 2 |
| Water | 5 |
| Gelling agent | (to adjust viscosity) |
| Acidifying agent | (as needed) |
| Total | 100.0 |

The chocolate filling had a water activity Aw of 0.77.

### Deposition of dough/filling layers and baking/packaging

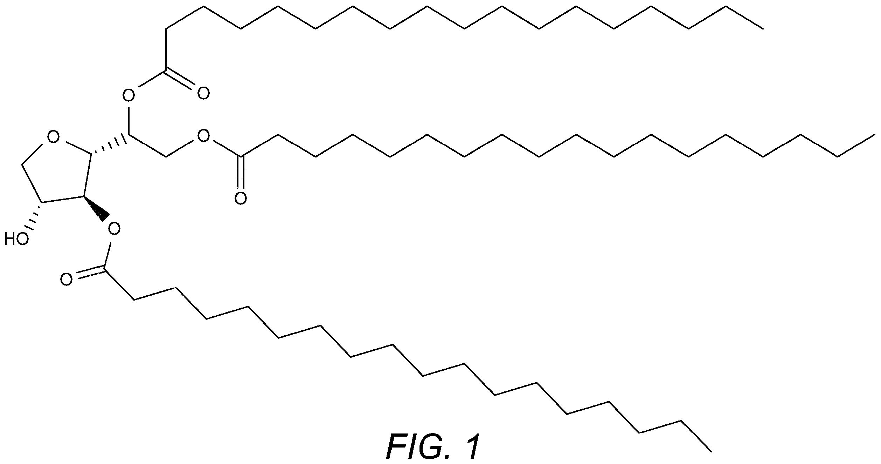

The process is illustrated by figure 1 of EP2384630.

A sheet of baking paper of appropriate dimensions was placed on a baking tray. A first layer of the dough material was extruded via a sheet extrusion die and directly deposited at a thickness of 5 mm on the baking paper. Subsequently, a layer of the filling material was extruded with a second sheet extrusion die and directly deposited at a thickness of 1 mm on the first layer of the dough material.

Dark chocolate drops (26% fat; contains 0.95% STS) were dispersed in an amount of 5 wt%, based on the total weight of the soft cake before baking (including the second dough layer coming after), on the layer of filling material.

Finally, a second layer of the dough material was extruded via a third sheet extrusion die and directly deposited at a thickness of 5 mm on the layer of the filling material and chocolate drops.

In a variation of the above deposition process, the layers of the dough material were produced by rolling between cylinders, followed by deposition.

A forced convection oven was pre-heated to 200°C. The tray with the deposited arrangement of dough layers and filling layer was placed in the oven, the temperature of the oven reduced to 175°C and the dough and filling baked for about 19 minutes.

Then, after active cooling with fans reducing the inside temperature to 85°C, the brownies sheets were cut into pieces of 12 x 12 cm, then cooled at 20 to 25°C (inside temperature) in a cooling tunnel and finally individually hermetically packed (in a U-shaped cardboard package with a bottom and two opposite sides - protecting against breakage) and flowpacked and stored for 3 days at 18°C.

Both control and invention recipe behave the same at processing and look similar at the packaging stage.

### Storage

Then, some products were stored at 18°C and others at 25°C (both isothermal +/-1°C). After storage for three weeks at 18°C, the soft cake had a water activity of 0.76.

### Sensory evaluation

The two brownies obtained in this example resemble freshly baked brownies in visual appearance, taste and texture. In particular, the inner layer of filling material is not perceived as a separate layer, but appears as an inner part of a single dough layer, simulating a higher moisture content and a slightly unbaked quality, which remains after storage for up to 6 months.

After 8 weeks of storage at 25°C, the control has fat bloom (appearing as white dots, believed to be cocoa butter) on the cut side of the brownie, but no fat bloom on the top: see figure 5B. It looks unacceptable for the consumer. The fact that there is no bloom on top may come from a protection by the typical "Brownie crust".

On the contrary, after 8 weeks of storage, the Brownie according to the invention (with STS) has no significant fat bloom (neither at 18°C nor 25°C, neither on sides nor top) and is suitable for consumers (unlike the control).

## Claims

1. A comestible product comprising a continuous bakery portion and, optionally, one or more discrete inclusions, the comestible product comprising one or more sources of cocoa butter or cocoa butter equivalent, and the continuous bakery portion comprising sorbitan tristearate.

2. A comestible product according to claim 1 or claim 2, wherein the comestible product is a soft cake, a cookie or a biscuit.

3. A comestible product according to any of the preceding claims, wherein the continuous bakery portion comprises:
a source of cocoa butter or cocoa butter equivalent; and/or
cocoa powder or defatted cocoa powder, preferably alkalized defatted cocoa powder.

4. A comestible product according to any of the preceding claims, wherein the continuous bakery portion has a surface having a colour such that the presence of any fat bloom thereon would be readily discernable.

5. A comestible product according to any of the preceding claims, wherein the one or more discrete inclusions comprises a source of cocoa butter or cocoa butter equivalent, and preferably wherein the source of cocoa butter or cocoa butter equivalent comprises chocolate and/or chocolate compounds.

6. A comestible product according to any of the preceding claims, wherein the sorbitan tristearate is present in an amount of up to 3wt% of the continuous bakery portion, and wherein preferably the sorbitan tristearate is present in an amount of from 0.2 to 1.0wt% of the continuous bakery portion.

7. A comestible product according to any of the preceding claims, wherein the saturated fat content is less than or equal to 49wt% by weight of the total fatty acids in the continuous bakery portion of the product, preferably less than or equal to 30wt%.

8. A comestible product according to any of the preceding claims, wherein the continuous bakery portion has less than 32 wt% fat, preferably less than 16wt%, more preferably less than 12wt%.

9. A comestible product according to any of the preceding claims, the product further comprising a filling and/or a partial coating.

10. A method of producing a comestible product, the method comprising:
(i) preparing a dough,
(ii) optionally adding one or more discrete inclusions to the dough, and
(iii) baking the dough to form one or more comestible products,
wherein the comestible product comprises one or more sources of cocoa butter or cocoa butter equivalent, the one or more sources of cocoa butter or cocoa butter equivalent being present in the dough and/or the one or more discrete inclusions, and
wherein the dough comprises sorbitan tristearate.

11. The method of claim 10, wherein the one or more discrete inclusions are selected from chocolate chips, chocolate compound chips, nuts, dried fruit, honeycomb, pretzel, and candy pieces, or two or more thereof.

12. The method of claim 10 or claim 11, wherein the baked comestible products are allowed to cool passively after baking and are packed when the product temperature reach between 24 and 30°C.

13. The method of any of claims 10 to 12, wherein the dough comprises a source of fat, and wherein the source of fat has an SFC of less than 5% at 25°C

14. The method of any of claims 10 to 13, wherein the method is for the production of the comestible product of any of claims 1 to 9.

15. Use of sorbitan tristearate in a continuous bakery portion of a comestible product comprising a source of cocoa butter or cocoa butter equivalent, to prevent fat bloom.

## Patentansprüche

1. Essbares Produkt, umfassend einen kontinuierlichen Backwarenanteil und optional einen oder mehrere diskrete Einschlüsse, wobei das essbare Produkt eine oder mehrere Quellen von Kakaobutter oder Kakaobutteräquivalent umfasst und der kontinuierliche Backwarenanteil Sorbitantristearat umfasst.

2. Essbares Produkt nach Anspruch 1 oder Anspruch 2, wobei das essbare Produkt ein Weichkuchen, ein Keks oder ein Biskuit ist.

3. Essbares Produkt nach einem der vorstehenden Ansprüche, wobei der kontinuierliche Backwarenanteil umfasst:
eine Quelle von Kakaobutter oder Kakaobutteräquivalent; und/oder
Kakaopulver oder entfettetes Kakaopulver, vorzugsweise alkalisiertes entfettetes Kakaopulver.

4. Essbares Produkt nach einem der vorstehenden Ansprüche, wobei der kontinuierliche Backwarenanteil eine Oberfläche mit einer solchen Farbe aufweist, dass das Vorhandensein einer Fettausblühung darauf leicht erkennbar wäre.

5. Essbares Produkt nach einem der vorstehenden Ansprüche, wobei der eine oder die mehreren diskreten Einschlüsse eine Quelle von Kakaobutter oder Kakaobutteräquivalent umfassen und wobei vorzugsweise die Quelle von Kakaobutter oder Kakaobutteräquivalent Schokolade und/oder Schokoladenverbindungen umfasst.

6. Essbares Produkt nach einem der vorstehenden Ansprüche, wobei das Sorbitantristearat in einer Menge von bis zu 3 Gew.-% des kontinuierlichen Backwareneils vorliegt und wobei das Sorbitantristearat vorzugsweise in einer Menge von 0,2 bis 1,0 Gew.-% des kontinuierlichen Backwarenanteils vorliegt.

7. Essbares Produkt nach einem der vorstehenden Ansprüche, wobei der Gehalt an gesättigtem Fett weniger als oder gleich 49 Gew.-% der gesamten Fettsäuren in dem kontinuierlichen Backwarenanteil des Produkts beträgt, vorzugsweise weniger als oder gleich 30 Gew.-%.

8. Essbares Produkt nach einem der vorstehenden Ansprüche, wobei der kontinuierliche Backwarenanteil weniger als 32 Gew.-% Fett aufweist, vorzugsweise weniger als 16 Gew.-%, mehr bevorzugt weniger als 12 Gew.-%.

9. Essbares Produkt nach einem der vorstehenden Ansprüche, wobei das Produkt ferner eine Füllung und/oder einen Teilüberzug umfasst.

10. Verfahren zum Herstellen eines essbaren Produkts, wobei das Verfahren umfasst:
(i) Herstellen eines Teigs,
(ii) optional Hinzufügen eines oder mehrerer diskreter Einschlüsse zu dem Teig und
(iii) Backen des Teigs, um ein oder mehrere essbare Produkte zu bilden,
wobei das essbare Produkt eine oder mehrere Quellen für Kakaobutter oder Kakaobutteräquivalent umfasst, wobei die eine oder die mehreren Quellen von Kakaobutter oder Kakaobutteräquivalent in dem Teig und/oder dem einen oder den mehreren separaten Einschlüssen vorhanden sind und
wobei der Teig Sorbitantristearat umfasst.

11. Verfahren nach Anspruch 10, wobei der eine oder die mehreren diskreten Einschlüsse ausgewählt sind aus Schokoladensplittern, Schokoladenverbundsplittern, Nüssen, getrockneten Früchten, Waben-, Brezel- und Süßwarenstücken oder zwei oder mehr davon.

12. Verfahren nach Anspruch 10 oder Anspruch 11, wobei die gebackenen essbaren Produkte nach dem Backen passiv abkühlen und verpackt werden, wenn die Produkttemperatur zwischen 24 und 30 °C erreicht.

13. Verfahren nach einem der Ansprüche 10 bis 12, wobei der Teig eine Fettquelle umfasst und wobei die Fettquelle eine SFC von weniger als 5 % bei 25 °C aufweist.

14. Verfahren nach einem der Ansprüche 10 bis 13, wobei das Verfahren zur Herstellung des essbaren Produkts nach einem der Ansprüche 1 bis 9 dient.

15. Verwendung von Sorbitantristearat in einem kontinuierlichen Backwarenanteil eines essbaren Produkts, das eine Quelle von Kakaobutter oder Kakaobutteräquivalent umfasst, um Fettausblühung zu verhindern.

## Revendications

1. Produit comestible comprenant une partie continue de boulangerie et, facultativement, une ou plusieurs inclusions distinctes, le produit comestible comprenant une ou plusieurs sources de beurre de cacao ou d'équivalent de beurre de cacao, et la partie continue de boulangerie comprenant du tristéarate de sorbitan.

2. Produit comestible selon la revendication 1 ou la revendication 2, dans lequel le produit comestible est un gâteau moelleux, un cookie ou un biscuit.

3. Produit comestible selon l'une quelconque des revendications précédentes, dans lequel la partie continue de boulangerie comprend :
une source de beurre de cacao ou d'équivalent de beurre de cacao ; et/ou
de la poudre de cacao ou de la poudre de cacao dégraissé, de préférence de la poudre de cacao dégraissé alcalinisé.

4. Produit comestible selon l'une quelconque des revendications précédentes, dans lequel la partie continue de boulangerie a une surface ayant une couleur telle que la présence de l'un quelconque blanchiment gras sur celle-ci serait aisément perceptible.

5. Produit comestible selon l'une quelconque des revendications précédentes, dans lequel la ou les inclusions distinctes comprennent une source de beurre de cacao ou d'équivalent de beurre de cacao, et de préférence dans lequel la source de beurre de cacao ou d'équivalent de beurre de cacao comprend du chocolat et/ou des composés de chocolat.

6. Produit comestible selon l'une quelconque des revendications précédentes, dans lequel le tristéarate de sorbitan est présent en une quantité allant jusqu'à 3 % en poids de la partie continue de boulangerie, et dans lequel de préférence le tristéarate de sorbitan est présent en une quantité allant de 0,2 à 1,0 % en poids de la partie continue de boulangerie.

7. Produit comestible selon l'une quelconque des revendications précédentes, dans lequel la teneur en matières grasses saturées est inférieure ou égale à 49 % en poids des acides gras totaux dans la partie continue de boulangerie du produit, de préférence inférieure ou égale à 30 % en poids.

8. Produit comestible selon l'une quelconque des revendications précédentes, dans lequel la partie continue de boulangerie a moins de 32 % en poids de matière grasse, de préférence moins de 16 % en poids, plus préférablement moins de 12 % en poids.

9. Produit comestible selon l'une quelconque des revendications précédentes, le produit comprenant en outre un fourrage et/ou un revêtement partiel.

10. Procédé de production d'un produit comestible, le procédé comprenant :
(i) la préparation d'une pâte,
(ii) l'ajout facultatif d'une ou plusieurs inclusions distinctes à la pâte, et
(iii) la cuisson au four de la pâte pour former un ou plusieurs produits comestibles,
dans lequel le produit comestible comprend une ou plusieurs sources de beurre de cacao ou d'équivalent de beurre de cacao, la ou les sources de beurre de cacao ou d'équivalent de beurre de cacao étant présentes dans la pâte et/ou dans la ou les inclusions distinctes, et
dans lequel la pâte comprend du tristéarate de sorbitan.

11. Procédé selon la revendication 10, dans lequel la ou les inclusions distinctes sont choisies parmi pépites de chocolat, pépites de composé de chocolat, fruits à coques, fruit séché, rayon de miel, bretzel, et morceaux de bonbon, ou deux de ceux-ci ou plus.

12. Procédé selon la revendication 10 ou la revendication 11, dans lequel on laisse les produits comestibles cuits au four refroidir passivement après cuisson au four et ils sont emballés lorsque la température de produit arrive entre 24 et 30 °C.

13. Procédé selon l'une quelconque des revendications 10 à 12, dans lequel la pâte comprend une source de matière grasse, et dans lequel la source de matière grasse a une teneur en matières grasses solides (SFC) inférieure à 5 % à 25 °C

14. Procédé selon l'une quelconque des revendications 10 à 13, dans lequel le procédé est pour la production du produit comestible selon l'une quelconque des revendications 1 à 9.

15. Utilisation de tristéarate de sorbitan dans une partie continue de boulangerie d'un produit comestible comprenant une source de beurre de cacao ou d'équivalent de beurre de cacao, pour empêcher un blanchiment gras.
